# FASCICULE DE BREVET EUROPEEN

(11) **EP 0 861 811 B1**
(45) Date de publication et mention de la délivrance du brevet: **17.07.2002**
(21) Numéro de dépôt: 98400239.4
(22) Date de dépôt: 04.02.1998
(51) Int. Cl.: C03B 11/08, C03B 9/32, C03B 9/16, C03B 9/193

(54) **Procédé de moulage de bouchon de verre plein et transversalement percé, moule de mise en oeuvre et bouchon de verre correnspondant**
Verfahren zum Herstellen eines perforiertes Glasstöpsel, Form zum Herstellen dieses Stöpsel und über Glasstöpsel
Method for moulding a pierced glass-stopper, mould for making it and corresponding glass-stopper

(30) Priorité: 28.02.1997 FR 9702450
(43) Date de publication de la demande: 02.09.1998
(73) Titulaire: VERRERIES POCHET ET DU COURVAL, 75010 Paris (FR)
(72) Inventeur: Varlet, Hubert, 75016 Paris (FR)
(74) Mandataire: Desaix, Anne

(56) Documents cités:
- DE-A- 2 506 455
- DE-C- 55 012
- DE-C- 77 789
- FR-A- 1 544 112
- US-A- 2 091 238
- US-A- 2 992 515

## Description

L'invention concerne les bouchons de verre plein destinés à fermer des bouteilles contenant des boissons, en particulier des boissons gazeuses, notamment des liquides carbonatés.

Des procédés de moulage du verre pour fabriquer des flacons ou des bouteilles sont connus. Il existe principalement des procédés de moulage par injection de verre fondu sous presse dite « presse à injection », et des procédés à flaconnage automatique qui moulent une paraison de verre par soufflage d'air. Pour mouler des bouchons de verre plein, des procédés partant des mêmes principes sont connus, tel que celui décrit dans le brevet FR-A-1.544.112. Dans tous ces procédés, le verre passe d'un moule ébaucheur, où il est initialement introduit et formé par injection ou compression et aspiration d'air, à un moule finisseur, où il est démoulé après soufflage d'air, en transitant par une phase de transfert d'un moule à l'autre à l'aide d'un bras de transfert.

A partir de tels procédés, si l'on désire obtenir des bouchons de verre transversalement percés, il paraît difficile d'introduire ou de fixer des poinçons ou toute autre pièce permettant d'obtenir un tel perçage. Les moules sont en effet montés sur charnière définissant un grand rayon de démoulage. Dans ces conditions, les poinçons décrivent des trajectoires courbes lors du démoulage, ce qui est incompatible avec un perçage transversal et créé des lignes de fracture, ce qui fragilise sensiblement le bouchon une fois moulé.

Pour pallier ces inconvénients, l'invention repose sur l'utilisation d'un moule à ouverture parallèle, tel que le moule utilisé pour former les bagues des flacons de verre et qui est généralement intégré au bras de transfert. Un brochage solidaire de ce moule forme un alésage transversal du verre lors du moulage, l'ouverture en parallèle permettant le retrait de ce brochage sans déformer le perçage obtenu.

Plus précisément, l'invention a pour objet un procédé de moulage de bouchons de verre plein et transversalement percé, lequel procédé consiste, à un poste ébaucheur, à mouler le verre dans une structure de moulage à deux demi-empreintes formant une empreinte de bouchon possédant une ouverture parallèle, à monter des moyens de brochage traversant l'empreinte solidairement à la structure de moulage, et à presser et/ou souffler le verre puis, dans un poste finisseur, à poinçonner le verre, à aspirer l'air et à démouler le bouchon formé avant de subir un recuit.

Selon une caractéristique préférée, le brochage est commandé en position selon l'axe transversal pour décoller le verre afin d'éviter un temps de contact prolongé entre le verre chauffé à température élevé et les moyens de brochage.

L'invention concerne également un moule pour la mise en oeuvre de ce procédé comportant, en référence à un plan de symétrie, deux demi-coques, une demi-empreinte de bouchon dans chaque demi-coque et au moins une paire de broches, chaque broche étant solidaire d'une demi-coque.

Avantageusement, les demi-coques sont munies de moyens de commande de déplacement des broches selon l'axe transversal, afin de décoller rapidement les broches du verre avant la fin du moulage au poste ébaucheur pour réduire leur échauffement et éviter la déformation du verre.

De manière préférée, les broches sont en forme de troncs de cône symétriques et perpendiculaires au plan de symétrie. Les surfaces de base des troncs de cône de diamètres plus étroits sont en contact au niveau du plan de symétrie et s'emboîtent l'une dans l'autre.

L'invention concerne également un bouchon de verre plein qui possède un perçage transversal, et qui est réalisé d'un seul bloc de verre, à partir d'un procédé de moulage du type décrit ci-dessus.

Que ce soit à partir d'une machine à injecter ou d'une machine à flaconnage classique, l'invention permet d'obtenir des bouchons de verre percés en grande quantité, la cadence de production pouvant dépasser 4000 bouchons par heure et par moule, et sans reprise mécanique. De plus, le bouchon en verre présente l'avantage par rapport au bouchon de céramique (réalisé à partir de kaolin ou autres matériaux similaire) d'être parfaitement recyclable.

D'autres caractéristiques et avantages apparaîtront à la lecture du mode de réalisation détaillé qui suit, en référence aux figures annexées qui représentent respectivement :
- la figure 1, une vue schématique en coupe verticale d'un exemple de mise en oeuvre du procédé selon l'invention au poste ébaucheur;
- la figure 2, un exemple en coupe verticale de dispositif de commande de déplacement d'une broche de perçage du moule selon l'invention;
- la figure 3, un autre exemple de dispositif de commande de broche en coupe horizontale;

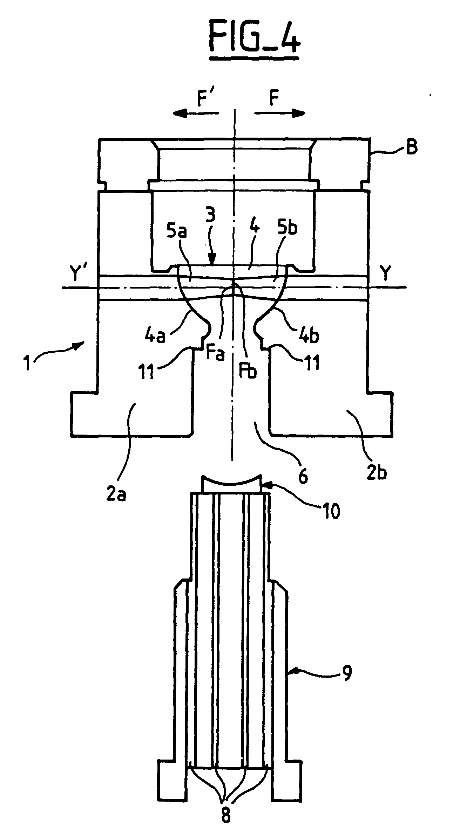

- la figure 4, une vue schématique en coupe verticale de l'exemple de mise en oeuvre de l'invention au poste finisseur;
- la figure 5, une vue de bouchon de verre plein selon l'invention muni d'un étrier de fixation sur bouteille.

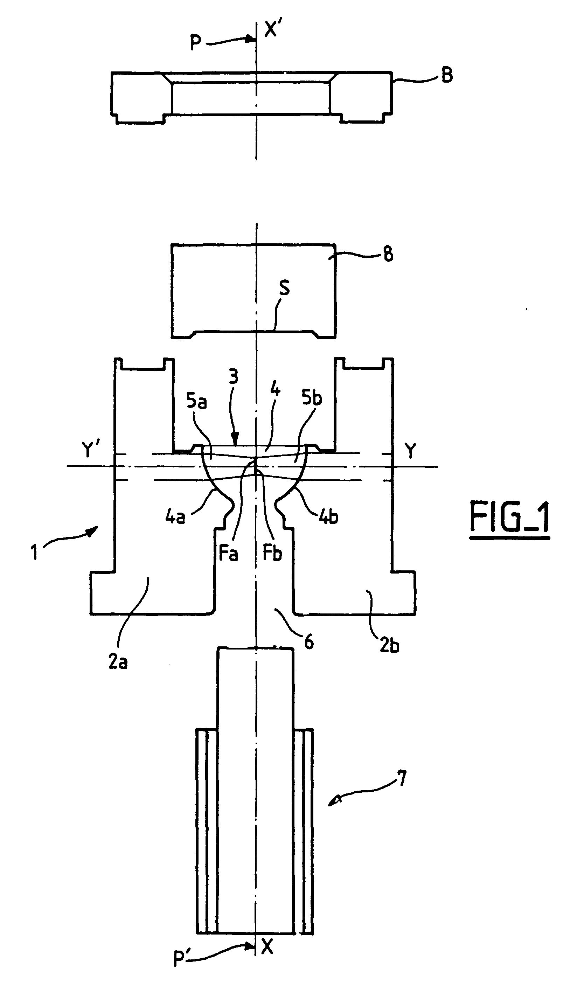

L'exemple de moule au poste ébaucheur est représenté sur la figure 1 selon un plan de symétrie contenant un axe de symétrie X'X. Le moule, comporte, selon l'invention, un corps de moule 1 composé de deux demi-coques 2a et 2b à ouverture parallèle fermée par un joint de moule.

Le moule est creusé selon deux demi-empreintes contiguës 4a et 4b formant une empreinte de bouchon 4, dans laquelle se projettent deux broches de forme tronconique, 5a et 5b, selon un axe transversal Y'Y. Les faces Fa et Fb des broches sont en contact sensiblement dans un plan P perpendiculaire au plan de la figure passant par l'axe X'X. Les broches sont maintenues de manière réglable dans les demi-coques 2a et 2b, comme expliqué plus loin. L'empreinte 4 est ouverte au niveau supérieur selon une ouverture 3 et débouche par le bas sur un alésage interne 6 selon l'axe de symétrie X'X.

Lors de l'ébauchage, une paraison de verre est introduite dans le moule 1 par l'ouverture 3 à une température environ égale à 1100-1200°C après fusion dans des fours standards, alors qu'un piston 7 est disposé dans l'alésage 6. Le piston compresse le verre dans le moule 1. Le verre est comprimé d'une part par le piston 7 et d'autre part par un couvercle 8 de forme adaptée à celle des demi-coques et maintenu par un boîtier B. Le couvercle 8 est disposé contre l'ouverture 3. La surface interne S du couvercle 8 en regard du moule possède une courbure adaptée à la forme désirée pour la partie de moule correspondante, cette forme étant plane dans l'exemple de réalisation illustré.

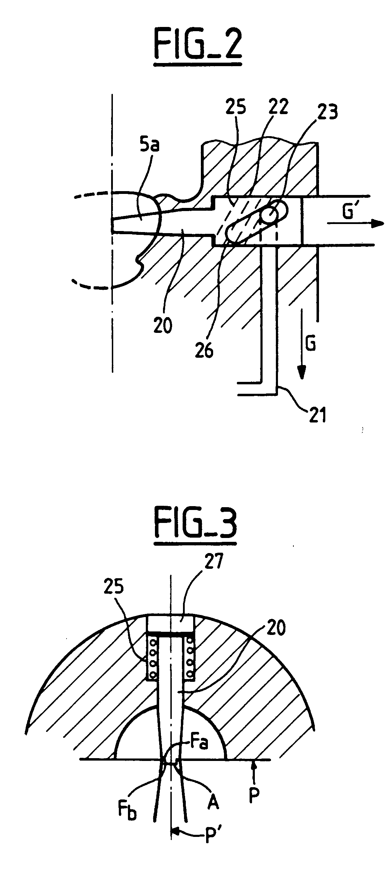

La figure 2 représente, plus précisément, un dispositif de commande de déplacement d'une broche 5a selon l'invention en coupe verticale. La broche 5a, de forme tronconique, est prolongée par un manchon cylindrique 20 qui s'articule perpendiculairement à un levier 21. Le manchon 20 peut coulisser dans un alésage 22 du moule, mais est maintenu en position par un arbre 23 solidaire du levier 21 contre un ressort 25. L'arbre 23 peut coulisser le long d'une encoche inclinée 26 pratiquée dans le manchon 20. Lorsque le levier 21 est déplacé verticalement (flèche G), le déplacement vertical de l'arbre 23 entraîne le déplacement horizontal (flèche G') de l'encoche 26, donc du manchon 20 et de la broche 5a.

Selon un autre exemple de réalisation, illustré schématiquement en coupe horizontal sur la figure 3, le déplacement du manchon 20 est commandé horizontalement par le déplacement d'une butée 27 contre la force exercée par le ressort 25. Sur cette figure, sont également représentées les broches 5a et 5b en forme de tronc de cône dont les faces de plus petits diamètres Fa et Fb viennent en contact dans le plan vertical P perpendiculaire au plan de symétrie P' de la figure 1 contenant l'axe X'X. Ces faces, complémentaires, ne sont pas planes, une avancée A de l'une venant s'emboîter dans un renfoncement de l'autre, de manière à empêcher une infiltration de verre entre les broches lors du moulage.

Le moule est ensuite transporté au poste finisseur pour refroidissement et finition. Le transit est facilité lorsque ce moule est intégré au bras de transfert. Dans tous les cas un levier adapté, connu de l'homme de l'art, peut être utilisé. Au poste finisseur, un poinçon 9, tel qu'illustré à la figue 4, traversé par des évents 8, reliés à une pompe à vide (non représentée) selon un montage connu, est introduit dans l'alésage 6.

L'embout 10 du poinçon 9 présente une forme qui complète celle de l'empreinte 4 selon la courbure désirée, afin de constituer une empreinte fermée du côté de l'alésage 6 lorsque le poinçon est poussé contre un épaulement 11 de celui-ci. L'air rémanent est alors aspiré à travers les évents 8 afin de compléter le moulage en favorisant l'expansion du verre dans le moule qui épouse ainsi au plus près la forme de l'empreinte.

Les deux demi-coques 2a et 2b à ouverture parallèle sont alors dégagées selon les flèches opposées F et F' par ouverture parallèle, les demi-empreintes et les broches solidaires des demi-coques se détachant du verre et libérant ainsi le bouchon de verre. Ce dernier est sorti et amené par tapis convoyeur vers un poste de recuit (non représenté).

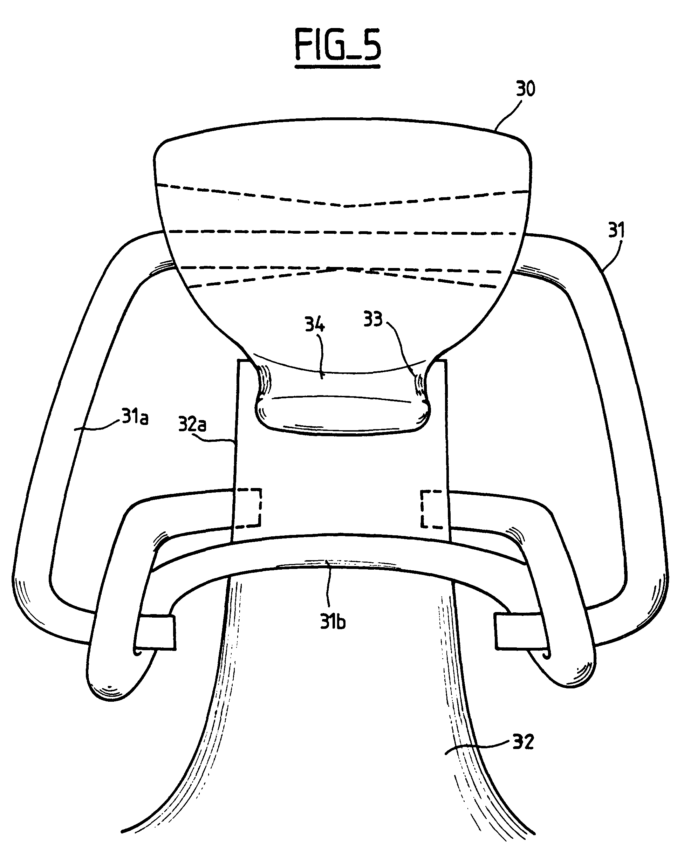

La figure 5 montre une vue de bouchon 30 de verre plein et percé obtenu par l'invention et muni d'un étrier 31 de fixation sur une bouteille 32. Le bouchon présente une gorge 33 dans laquelle vient se loger un joint 34 qui est écrasé entre la gorge 33 et la bague de bouteille 32a pour assurer une étanchéité entre le bouchon 30 et la bouteille 32.

L'étrier 31 est formé de deux fils métalliques 31a et 31b, conformés dont les extrémités de l'un, 31a, qui traverse le bouchon 30 à travers son perçage, prend appui dans des trous borgnes de la bague 32a de la bouteille 32. L'autre fil 31b sert à clipser l'étrier 31 sur la bouteille par appui en position stable dans laquelle le joint 34 est écrasé.

L'invention n'est pas limitée aux exemples décrits et représentés. Il est possible d'utiliser des postes ébaucheurs où le moulage se fait par soufflage d'air comprimé, comme dans les machines à flaconnage automatique, plutôt que par piston compresseur ou injecteur. L'empreinte de bouchon peut être disposé en position standard, partie supérieure du moule correspondant à la tête de bouchon, ou en position inverse.

Par ailleurs, le nombre d'empreintes par moule peut être multiple de façon à augmenter le rendement, le nombre de broches par perçage à réaliser peut être réduit à une seule broche transversale dont la commande en position est réalisée sur une seule extrémité, ou bien encore le nombre de perçages par moule peut être supérieur à un.

De plus, le verre utilisé peut être soit transparent soit translucide ou même opaque, par addition de colorants connus dans des proportions adaptées par l'homme du métier. Il est également possible d'utiliser un verre minérale ou un verre organique, par exemple du polyéthylène ou du polypropylène alimentaire.

## Revendications

1. Procédé de moulage de bouchons de verre plein et transversalement percé selon un axe (Y'Y), lequel procédé consiste, à un poste ébaucheur, à mouler le verre dans une structure de moulage (1) à deux demi-empreintes (4a, 4b) formant une empreinte (4) de bouchon possédant une ouverture parallèle, à monter des moyens de brochage (5a, 5b) traversant l'empreinte (4) solidairement à la structure de moulage (1), et à presser et/ou souffler le verre puis, dans un poste finisseur, à poinçonner le verre, à aspirer l'air et à démouler le bouchon formé avant de lui faire subir un recuit.

2. Procédé selon la revendication 1, **caractérisé en ce que** les moyens de brochage (5a, 5b) sont commandés en déplacement selon l'axe transversal (Y'Y) pour décoller le verre afin d'éviter un temps de contact prolongé entre le verre chauffé et les moyens de brochage (5a, 5b).

3. Moule pour la mise en oeuvre du procédé selon la revendication 1 ou 2, lequel moule comporte, en référence à un plan de symétrie (P') perpendiculaire à l'axe transversal (Y'Y), deux demi-coques (2a, 2b) à ouverture parallèle et fermée par un joint de moule, une demi-empreinte de bouchon (4a, 4b) creusée dans chaque demi-coque, au moins une paire de broches (5a, 5b) se projetant dans l'empreinte, chaque broche étant solidaire d'une demi-coque (2a, 2b) et possédant des faces d'extrémité (Fa, Fb) en contact mutuel, une ouverture supérieure (3) et un alésage inférieur (6) selon un axe de symétrie (X'X).

4. Moule selon la revendication 3, **caractérisé en ce qu'**il est associé, au poste d'ébaucheur, à un piston (7) disposé dans l'alésage (6) pour compresser le verre dans l'empreinte (4) en combinaison avec un couvercle (8) disposé contre l'ouverture (3), la surface interne du couvercle (8) en regard du moule possède une courbure adaptée à la forme désirée pour la partie de moule correspondante.

5. Moule selon l'une des revendications 3 et 4 pour la mise en oeuvre du procédé selon la revendication 2, **caractérisé en ce que** chaque broche (5a) est prolongée par un manchon cylindrique (20) qui s'articule sensiblement perpendiculairement à un levier (21), le manchon (20) pouvant coulisser dans un alésage (22) du moule (1), **en ce que** le manche (20) est maintenu en position par un arbre (23) solidaire du levier (21) contre un ressort (25), **en ce que** l'arbre (23) peut coulisser le long d'une encoche inclinée (26) pratiquée dans le manchon (20), le déplacement du levier (21) et de l'arbre (23) entraînant le déplacement perpendiculaire de l'encoche (26), du manchon 20 et de la broche (5a).

6. Moule selon l'une des revendications 3 et 4 pour la mise en oeuvre du procédé selon la revendication 2, **caractérisé en ce que** le déplacement d'un manchon (20) prolongeant la broche (5a) est commandé par le déplacement d'une butée (27) contre la force exercée par un ressort (25)

7. Moule selon l'une quelconque des revendications 3 à 6, **caractérisé en ce que** les faces de plus petits diamètres (Fa, Fb) des broches (5a, 5b) viennent en contact, une avancée de l'une venant s'emboîter dans un renfoncement de l'autre de manière à empêcher une infiltration de verre entre les broches.

8. Moule selon l'une quelconque des revendications 3 à 7, **caractérisé en ce qu'**il est associé, au poste finisseur, à un poinçon (9) traversé par des évents (8) reliés à une pompe à vide, **en ce que** le poinçon est introduit dans l'alésage (6) et poussé contre un épaulement (11) de celui-ci, l'air rémanent étant alors aspiré à travers les évents.

9. Moule selon la revendication 8, **caractérisé en ce que** le poinçon (9) présente un embout (10) dont la forme qui complète celle de l'empreinte (4) selon la courbure désirée, afin de constituer une empreinte fermée du côté de l'alésage (6).

10. Bouchon de verre plein qui possède un perçage transversal, réalisé d'un seul bloc de verre à partir du procédé et du moule selon l'une quelconque des revendications précédentes, lequel bouchon (30) présente une gorge (33) dans laquelle vient se loger un joint (34) qui est écrasé entre la gorge (33) et une bague de bouteille (32a) pour assurer une étanchéité entre le bouchon (30) et la bouteille (32).

11. Bouchon de verre plein selon la revendication 10, **caractérisé en ce que** le verre utilisé est transparent, translucide ou opaque et **en ce qu'**il est constitué de verre minéral ou organique, une coloration étant obtenu par addition d'un colorant en proportions adaptées.

## Patentansprüche

1. Verfahren zum Formen von Vollglas-Stöpseln, die quer zu einer Achse (YY') perforiert sind, wobei das Verfahren besteht aus: Formen des Glases an einem Vorformstand in einem Formwerkzeug (1) aus zwei halben Formhohlräumen (4a,4b), die eine Matrize (4) des Stöpsels bilden, wobei das Formwerkzeug eine parallele Öffnung besitzt, Anbringen einer Dornvorrichtung (5a,5b) quer zur Matrize (4) in fester Verbindung mit dem Formwerkzeug (1) und Pressen und/oder Blasen des Glases, dann in einem Endbearbeitungsstand Durchstechen des Glases, Absaugen von Luft und Herausnehmen des geformten Stöpsels aus der Form, bevor er einem Glühen unterzogen wird.

2. Verfahren nach Anspruch 1, **dadurch gekennzeichnet, daß** die Dornvorrichtung (5a,5b) entlang einer Querachse (YY') verschoben wird, um das Glas zu lösen, um eine verlängerte Zeit des Kontakts zwischen dem erhitzten Glas und der Dornvorrichtung (5a,5b) zu vermeiden.

3. Form zum Durchführen des Verfahrens nach Anspruch 1 oder 2, wobei bezogen auf eine Symmetrieebene (P') senkrecht zur Querachse (YY') die Form aufweist: zwei Halbschalen (2a,2b) mit einer Öffnung, die parallel verläuft und mit einem Formgelenk geschlossen wird, eine in jede Halbschale ausgehöhlte Stöpsel-Halbmatrize (4a,4b), mindestens ein Paar in die Matrize hineinragende Dorne (5a,5b), wobei jeder Dorn mit einer Halbschale (2a,2b) fest verbunden ist und Endflächen (Fa,Fb) im gegenseitigen Kontakt besitzt, eine obere Öffnung (3) und eine untere Bohrung (6) entlang einer Symmetrieachse (X'X).

4. Form mach Anspruch 3, **dadurch gekennzeichnet, daß** sie am Vorformstand mit einem in der Bohrung (6) angeordneten Stempel (7) zusammengebracht wird, um das Glas in der Matrize (4) in Kombination mit einem Deckel (8), der an der Öffnung (3) angeordnet ist, zu pressen, wobei die der Form gegenüberliegende Innenfläche des Deckels (8) eine Krümmung besitzt, die an die gewünschte Gestalt für den entsprechenden Teil der Form angepaßt ist.

5. Form nach einem der Ansprüche 3 und 4 zum Durchführen des Verfahrens nach Anspruch 2, **dadurch gekennzeichnet, daß** jeder Dorn (5a) durch eine zylindrische Manschette (20) verlängert ist, die im wesentlichen senkrecht zu einem Hebel (21) gelenkig angefügt ist, wobei die Manschette (20) in einer Bohrung (22) der Form (1) gleiten kann, daß die Manschette (20) mittels einer fest mit dem Hebel (21) verbundenen Welle (23) gegen eine Feder (25) an Ort und Stelle gehalten wird, und daß die Welle (23) entlang einer in die Manschette (20) eingearbeiteten geneigten Nut (26) gleiten kann, wobei die Verschiebung des Hebels (21) und der Welle (23) die senkrechte Verschiebung der Nut (26), der Manschette (20) und des Dorns (5a) zur Folge hat.

6. Form nach einem der Ansprüche 3 und 4 zum Durchführen des Verfahrens nach Anspruch 2, **dadurch gekennzeichnet, daß** die Verschiebung einer den Dorn (5a) verlängernden Manschette (20) von der Verschiebung eines Anschlags (27) gegen die von einer Feder (25) ausgeübten Kraft gesteuert wird.

7. Form nach einem der Ansprüche 3 bis 6, **dadurch gekennzeichnet, daß** die Flächen (Fa,Fb) der Dorne (5a,5b), die den kleinsten Durchmesser haben, in Kontakt kommen, ein Vorrücken des einen wird ein Hineinrücken des anderen nach sich zieht, so daß ein Eindringen von Glas zwischen die Dorne verhindert wird.

8. Form nach einem der Ansprüche 3 bis 7, **dadurch gekennzeichnet, daß** sie an einem Endbearbeitungsstand mit einem Stichel (9) zusammengebracht wird, der mit Zuglöchern (8) durchzogen ist, die an eine Vakuumpumpe angeschlossen sind, dadurch, daß der Stichel in die Bohrung (6) eingeführt wird und gegen einen Vorsprung (11) der Bohrung gestoßen wird, wobei die zurückbleibende Luft dann über die Zuglöcher abgesaugt wird.

9. Form nach Anspruch 8, **dadurch gekennzeichnet, daß** der Stichel (9) ein Ansatzstück (19) in einer Gestalt aufweist, die diejenige der Matrize (4) der gewünschten Krümmung folgend ergänzt, um an der Seite der Bohrung (6) eine geschlossene Matrize zu bilden.

10. Vollglas-Stöpsel, der eine querverlaufende Bohrung besitzt, hergestellt aus einem einzigen Glasblock mit dem Verfahren und der Form nach einem der vorstehenden Ansprüche, wobei der Stöpsel (30) eine Rille (33) aufweist, in welcher eine Dichtung (34) zu liegen kommt, die zwischen der Rille (33) und einem Flaschenring (32a) eingequetscht wird, um einen dichten Verschluß zwischen dem Stöpsel (30) und der Flasche (32) sicherzustellen.

11. Vollglas-Stöpsel nach Anspruch 10, **dadurch gekennzeichnet, daß** das verwendete Glas lichtdurchlässig, durchsichtig oder lichtundurchlässig ist, und daß er aus Mineralglas oder organischem Glas besteht, wobei eine Färbung durch Zugabe eines Farbstoffs in passenden Verhältnissen erzielt wird.

## Claims

1. A method of molding a transversely-pierced solid glass stopper on a transverse axis (Y'Y), wherein the method consists, in a roughing station, in molding the glass in a molding structure (1) having two parallel-opening half-cavities (4a, 4b) forming a stopper-shaped cavity (4), in securely mounting pin means (5a, 5b) that pass through the cavity (4) to the molding structure (1), and in pressing and/or blowing the glass, and then, in a finishing station, punching the glass, sucking out the air, and unmolding the shaped stopper prior to subjecting it to annealing.

2. A method according to claim 1, **characterized in that** the pin means (5a, 5b) are controlled to move along the transverse axis (Y, Y') to release the glass so as to avoid prolonged contact time between the heated glass and the pin means (5a, 5b).

3. A mold for implementing the method of claim 1 or 2, the mold comprising, relative to a plane of symmetry (P') perpendicular to the transverse axis (Y'Y), two parallel-opening half-shells (2a, 2b) closed by a mold joint, a stopper-shaped half-cavity (4a, 4b) formed in each half-shell, at least one pair of pins (5a, 5b) projecting into the cavity, each pin being secured to one of the half-shells (2a, 2b), and the pins possessing end faces (Fa, Fb) for coming into mutual contact, a top opening (3), and a bottom bore (6) on an axis of symmetry (X'X).

4. A mold according to claim 3, **characterized in that** in the roughing station it is associated with a piston (7) disposed in the bore (6) to compress the glass in the recess (4) in combination with a cover (8) disposed against the opening (3), the inside surface of the cover (8) facing into the mold being of curvature that matches the shape desired for the corresponding portion of the mold.

5. A mold according to claim 3 or 4 to implement the method according to claim 2, **characterized in that** each pin (5a) is extended by a cylindrical shank (20) hinged substantially perpendicularly to a lever (21), the shank (20) being slidable in a bore (22) in the mold (1), **in that** the shank (20) is held in position against a spring (25) by a shaft (23) secured to the lever (21), and **in that** the shaft (23) is slidable along an inclined slot (26) formed in the shank (20), movement of the lever (21) and of the shaft (23) giving rise to perpendicular movement of a slot (26), of the shank (20), and of the pin (5a).

6. A mold according to claim 3 or 4 for implementing the method according to claim 2, **characterized in that** movement of a shank (20) extending the pin (5a) is controlled by moving an abutment (27) against force exerted by a spring (25).

7. A mold according to any one of claims 3 to 6, **characterized in that** the smaller-diameter faces (Fa, Fb) of the pins (5a, 5b) come into contact, a projection on one of them being received in a recess in the other so as to prevent glass infiltrating between the pins.

8. A mold according to any one of claims 3 to 7, **characterized in that** it is associated in the finishing station with a punch (9) having vents (8) passing therethrough and connected to a vacuum pump, and **in that** the punch is inserted into the bore (6) and is pushed against a shoulder (11) therein, any air remaining in the mold then being extracted via the vents.

9. A mold according to claim 8, **characterized in that** the punch (9) has an endpiece (10) of a shape that finishes off the shape of the mold cavity (4) with the desired curvature, so as to constitute a cavity that is closed adjacent to the bore (6).

10. A transversely-pierced solid glass stopper, made as a single block of glass using the method and the mold according to any preceding claims, wherein the stopper (30) has a neck (33) in which a sealing ring (34) is received, which ring is compressed between said neck (33) and the outlet (32a) of the bottle to provide sealing between the stopper (30) and the bottle (32).

11. A solid glass stopper according to claim 10, **characterized in that** the glass used is transparent, translucent, or opaque, and **in that** it is constituted by an inorganic or an organic glass, coloring being obtained by adding appropriate quantities of a coloring agent.
